# EUROPÄISCHE PATENTSCHRIFT

(11) **EP 3 613 381 B1**
(45) Veröffentlichungstag und Bekanntmachung des Hinweises auf die Patenterteilung: **19.10.2022**
(21) Anmeldenummer: 18190543.1
(22) Anmeldetag: 23.08.2018
(51) Int. Cl.: A61C 19/04, A61C 19/10

(54) **SYSTEM AUS EINER KAMERA-APP UND EINEM FARBSELEKTIONSHILFSKÖRPER UND VERFAHREN ZUR BESTIMMUNG VON ZAHNFARBEN**
SYSTEM CONSISTING OF CAMERA-APP AND A COLOUR SELECTION ASSISTANCE UNIT AND METHOD FOR DETERMINING THE COLOR OF TEETH
SYSTÈME COMPOSÉ D'UNE APPLICATION DE CAMERA ET D'UN GABARIT D'AIDE À LA SÉLECTION DE COULEUR, ET PROCÉDÉ DE DÉTERMINATION DE LA COULEUR D'UNE DENT

(43) Veröffentlichungstag der Anmeldung: 26.02.2020
(73) Patentinhaber: Ivoclar Vivadent AG, 9494 Schaan (LI)
(72) Erfinder: Lerch, Stefan, 3013 Bern (CH); Schlegel, Manuel, 8887 Mels (CH)
(74) Vertreter: Baronetzky, Klaus

(56) Entgegenhaltungen:
- EP-A2- 2 133 820
- WO-A1-2012/038474
- WO-A1-2017/046829
- US-A1- 2013 243 310

## Beschreibung

Objekts, gemäß dem Oberbegriff von Anspruch 1, sowie ein System aus einer Kamera-App und einem Farbselektionshilfskörper gemäß dem Oberbegriff von Anspruch 18.

Zu dentalen Objekten gehören Zähne, aber auch Zahnstümpfe, Gingivae und dentale Restaurationen.

Farbschlüssel sind seit langem bekannt, beispielsweise aus der DE 195 09 830 A1 und der WO 2012/038474 A1.

Ein derartiger Farbschlüssel dient dazu, die für den Patienten bestmögliche Farbwahl eines Ersatzzahnes zu gewährleisten.

Ein derartiger Ersatzzahn ist beispielsweise von zwei gesunden Zähnen umgeben, oder hat einen gesunden Nachbarzahn. Das Bestreben ist, den Zahnersatz farblich an die Umgebung anzupassen, damit die Dentalrestauration möglichst unauffällig gelingt.

In der Praxis wird der Farbschlüssel in die Nähe der gesunden Zähne gehalten, und zwar versuchsweise mit verschiedenen Farbwahlflächen, bis diejenige Farbwahlflächen ermittelt ist, die dem Nachbarzahn am nächsten kommt.

Ein Problem hierbei ist es, dass Zähne typischerweise einen Farbverlauf haben. Je nachdem, an welche Stelle der Zahnarzt den Zahnschlüssel mit der betreffenden Farbwahlfläche hält, wird die Ähnlichkeit anders beurteilt.

Ein Verfahren zur Bestimmung von Farben eines dentalen Objekts ist aus der US 2013/243 310 A1 bekannt. Dieses Verfahren hat sich die Kalibrierung einer Kamera zu Ziele gesetzt, Die Handhabung in der Praxis ist jedoch verbesserungsfähig. Insofern besteht eine Verbesserung in der Lösung gemäß der EP 2 255 749 A1. Bei dieser Lösung sind die Farbwahlflächen gegenüber handelsüblichen Zahnschlüsseln deutlich verkleinert, so dass jede Farbwahlfläche nur einen Bruchteil der Abmessungen eines Zahns hat.

Diese Lösung hat den Vorteil, dass mehrere Farbwahlflächen vergleichshalber neben den gesunden Zahn gehalten werden können, um einen besseren Farbvergleich durchführen zu können.

Derart kleine Farbwahlflächen sind zum einen schlecht sichtbar und zum anderen verschmutzungsanfälliger.

Wenn beispielsweise Speichel auf den Farbschlüssel gerät, reflektiert der betreffende Teil des Farbschlüssel stärker, was einen erheblich anderen optischen Eindruck macht.

Versuche mit unterschiedlichen Testpersonen mit den bekannten Farbschlüsseln, die Farbwahlhilfskörper aufweisen, haben ergeben, dass die Testpersonen eine farbliche Übereinstimmung und eine farbliche Ähnlichkeit sehr unterschiedlich wahrnehmen, wenn Sie die bekannten Farbschlüssel in üblicher Weise verwenden.

Demgegenüber liegt der Erfindung die Aufgabe zugrunde, ein Verfahren zur Bestimmung von Farben eines dentalen Objekts gemäß dem Oberbegriff von Anspruch 1 sowie ein System aus einer Kamera-App und einem Farbselektionshilfskörper gemäß dem Obergebriff von Anspruch 18 zu schaffen, die hinsichtlich der Zuverlässigkeit der Beurteilung eines Farbvergleich-Ergebnisses verbessert sind.

Diese Aufgabe wird erfindungsgemäß durch Anspruch 1 bzw. 18 gelöst. Vorteilhafte Weiterbildungen ergeben sich aus den Unteransprüchen.

Erfindungsgemäß ist ein System aus einer Kamera-App und einem Farbselektionshilfskörper und ein Verfahren zur Bestimmung von Farben im Dentalbereich vorgesehen. Der Farbselektionshilfskörper hat bevorzugt einen im Wesentlichen U-förmigen oder L-förmigen oder aber einen ringförmigen Aufbau.

Es ist vorgesehen, dass der Farbselektionshilfskörper zusammen mit einem natürlichen oder künstlichen Zahn oder sonstigen dentalen Objekt fotografisch aufgenommen wird und das so erzeugte Foto ausgewertet wird. Um dies zu bewerkstelligen, wird der Farbselektionshilfskörper in die Nachbarschaft des dentalen Objektes gehalten.

Hierzu weist der Farbselektionshilfskörper mindestens ein Referenzmerkmal auf, bevorzugt sogar vier Referenzmerkmale. Die Referenzmerkmale dienen der Referenzierung im aufgenommenen Bild, also der räumlichen Zuordnung zu den übrigen erfassten Bestandteilen des Bildes.

Auf dem Farbselektionshilfskörper sind ferner eine Mehrzahl oder auch eine Vielzahl von Farbflächen angeordnet. Diese entsprechen in ihrer Farbgebungen dentalen Objekten wie Zähnen, Stümpfen oder auch Gingivae.

Je nach Ausleuchtungs-Situation bei der Bildaufnahme kann ein Helligkeitsgradient über die Erstreckung des aufgenommenen Bildes bestehen. Um diesen zu kompensieren, wird zu einem beliebigen Zeitpunkt bis zur Farbidentifikation, bevorzugt aber umgehend nach der Bildaufnahme, eine Korrektur des Helligkeitsverlaufs vorgenommen.

Hier zu bestehen voneinander beabstandet auf dem Farbselektionshilfskörper Farbflächen mit gleicher Helligkeit und gleicher Farbe, beispielsweise 4 solche Farbflächen. Wenn diese bei dem aufgenommenen Bild unterschiedlich erscheinen, wird dieser Unterschied zur Helligkeitskorrektur bzw. zur Korrektur des Helligkeitsverlaufs ausgenutzt.

Bevorzugt anschließend hieran, also nach der Korrektur des Helligkeitsverlauf, werden die Farbflächen ausgelesen.

Für die Bild-Aufnahme wird nun das dentale Objekt, also der zu erfassende Zahn, Stumpf oder die Gingiva oder die Zahnrestauration in räumliche Nähe zu dem Farbselektionshilfskörper gebracht. Bevorzugt ist dieser den genannten aufzunehmenden Objekten an mindestens zwei Seiten benachbart.

Basierend auf dem aufgenommenen Bild wird später die Farbe des dentalen Objekte, also z.B. die Zahnfarbe, die Stumpffarbe oder die Gingivafarbe bestimmt.

Das erfindungsgemäße Verfahren umfasst bevorzugt zunächst die Erkennung oder zumindest die räumliche Zuordnung einer Stelle in dem Bild, an dem sich das dentale Objekt, also der Zahn, der Zahnstumpf, die Gingiva oder die Zahnrestauration befinden sollte.

Im Folgenden wird hier der Einfachheit halber insofern von dem Zahn gesprochen, ohne dass dies einschränkend zu verstehen wäre.

Zunächst wird relativ zu mindestens einem Referenzmerkmal, insbesondere mehreren Referenzmerkmalen, ein Startpunkt oder eine Kleinregion in dem Bild bestimmt. Ein solcher Startpunkt kann z.B. ein Schnittpunkt von Verbindungslinien der Referenzmerkmale in dem Bild sein. Dieser wird markiert. Der Startpunkt oder die Kleinregion des Bildes, die den Startpunkt aufweist, wird zu ihren Außengrenzen in Abhängigkeit von einem Unterschied der Helligkeit bis zu einer Endregion vergrößert.

Dies erfolgt, bis ein dentales Objekt im Bild erfasst ist. Das Bild kann auch ein Bild einer Bildsequenz sein.

Besonders günstig ist es, wenn relativ zu den Referenzmerkmalen ein Startpunkt oder eine Kleinregion in dem Bild bestimmt wird und in Abhängigkeit von der Bildinformation innerhalb des Startpunktes oder der Kleinregion eine Endregion segmentiert wird. In den so erzeugten Segmenten wird dann je die Farbe bestimmt.

Beim Segmentieren ist es besonders günstig, wenn die Endregion unter Berücksichtigung der Nachbarpixel innerhalb eines vorgegebenen Nachbarschaftsbereichs iterativ segmentiert wird.

Ausgewählte Segmente der Endregion können dahingehend geprüft werden, welche Farben der Farbflächen ihnen am ähnlichsten sind.

Vorteilhaft ist es, wenn der Farbselektionshilfskörper per Bildauswertung automatisch erkannt wird, insbesondere aufgrund des mindestens einen Referenzmerkmales. Insofern lassen sich Referenzmerkmals, die z.B. schwarze Kreise auf dem Farbselektionshilfskörper sein können, dafür und auch für die vorstehende Schnittpunktbestimmung einsetzten.

Anschließend wird basierend auf Farbflächen auf dem Farbselektionshilfskörper eine Transformation in einen Referenzraum vorgenommen wird, also eine Farbanpassung entsprechend dem Grauabgleich, nach der Art einer Graukarte, jedoch im Zahnfarbenraum oder im Farbraum des dentalen Objektes. Es versteht sich, dass hier unter Graukarte nicht eine tatsächliche Graukarte zu verstehen ist, sondern eine Normierung, wie sie typischerweise mithilfe einer Graukarte realisiert wird.

Jedenfalls wird das Ergebnis der Transformation normiert und das normierte Ergebnis mit einer virtuellen Bibliothek verglichen, die entweder Daten von Schlüsselzähnen oder sonstigen dentalen Objekten oder Daten von Restaurationen oder Kombinationen dieser aufweist.

Ein besonderer Vorteil der geeignet ausgewählten Referenzmerkmale ist es, dass diese die automatische Erkennung ihre Position erlauben. Die Referenzmerkmale haben hierzu eine gut erkennbare Form und liegen beispielsweise als kontraststarke, insbesondere schwarze Kreise an den Außengrenzen oder Außenkanten des Farbselektionshilfskörper vor.

Es ist auch möglich, Form und Größe der Referenzmerkmale vorab abzuspeichern und damit eine Korrektur von Schrägstellungsfehlern oder Fokussierfehlern vorzunehmen. Insbesondere sind die Referenzmerkmale so ausgestaltet, dass sie von anderen kreisförmigen und möglicherweise ein Bild erscheinenden Elementen, also stochastisch verteilten ähnlichen grafischen Gebilden wie beispielsweise Nasenlöchern, unterscheidbar sind.

Die Referenzmerkmale sind typischerweise als Flächen ausgebildet, können aber auch Punkte sein. Sie haben definierte Einzelmerkmale wie Größe, Form, Helligkeit, Ausrichtung und so weiter.

Der Farbselektionshilfskörper kann auch an einen Nachbarzahn oder mehrere Nachbarzähne einer zu erstellenden Dentalrestauration gehalten werden. Hierfür ist insbesondere eine L-Form günstig.

Die Farbflächen auf dem Farbselektionshilfskörper sind bevorzugt Zahnfarben nach einem beliebigen System. Sie sind innen an dem Farbselektionshilfskörper angeordnet, um so einen etwaigen Farbgradienten oder Helligkeitsgradienten aufgrund der geringen Entfernung von dem Zahn weniger ins Gewicht fallen zu lassen.

Aufgrund der Helligkeitskorrektur und der Farbkorrektur mit den hier beschriebenen Maßnahmen, und aufgrund des Vergleichs im transformierten Farbraum, ist auch eine preisgünstige Kamera geeignet, sehr gute Vergleichsergebnisse zu erzielen. Dementsprechend eignet sich auch ein Smartphone oder Tablet für die erwünschte Bildaufnahme, wobei dann die Verarbeitung in einer entsprechenden Applikation hinterlegt ist.

Weitere Vorteile, Einzelheiten und Merkmale ergeben sich aus der nachfolgenden Beschreibung eines Ausführungsbeispiels der Erfindung anhand der Zeichnung.

Es zeigen:
- Fig. 1: eine schematische Ansicht eines erfindungsgemäßen Farbwahlhilfskörpers unter Darstellung in der Anwendung auf einen Zahn; und
- Fig. 2: ein Flussdiagramm für die Erläuterung des erfindungsgemäßen Verfahrens.

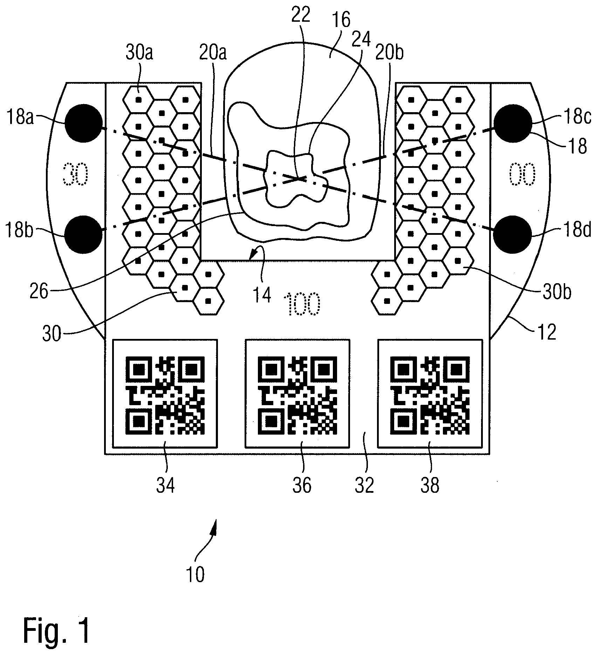

Aus Fig. 1 ist ein Farbselektionshilfskörper 10 ersichtlich, der vom grundsätzlichen Aufbau U-förmig ausgebildet ist.

Der Farbselektionshilfskörper 10 weist Außenkanten 12 und Innenkanten 14 auf. Die Innenkanten 14 weisen eine Breite auf, die geeignet ist, einen Zahn 16 zu umgeben. Die Innenbreite ist etwas größer als die Breite eines Zahnes, sei es eines künstlichen oder eines natürlichen Zahns und beträgt im Beispielsfall 1 cm.

Die Nähe der Innenkanten 14 beträgt in diesem Fall etwas weniger als die Höhe eines Zahns vom Gingivasaum aus betrachtet, lässt sich jedoch beliebig an das erwünschte Maß anpassen.

Erfindungsgemäß ist es vorgesehen, dass ein Bild in der in Fig. 1 dargestellten Position des Farbselektionshilfskörper 10 über dem Zahn 16 aufgenommen wird. Typischerweise erscheinen dann in dem Bild seitlich des Zahns 16 Teile von Nachbarzähnen, die hier der Einfachheit halber nicht dargestellt sind.

Der Farbselektionshilfskörper 10 ist erfindungsgemäß in besonderer Weise ausgebildet. Er weist 4 Referenzmerkmale, hier in Form von schwarzen Kreisen 18a, 18b, 18c und 18d auf. Die Kreise 18a bis 18d sind der Außenkante 12 benachbart und in Fig. 1 diagonal über zwei gestrichelte Linien 20a und 20b miteinander verbunden. Diese Linien 20a und 20b bestehen nicht in der Wirklichkeit, sondern ... sind nur zu Illustrationszwecken gezeichnet, um den Schnittpunkt 22 der Linien aufzuzeigen - eine fixe relative Position relativ zu den Referenzmerkmalen.

Dieser Schnittpunkt 22 stellt die zentrale Mitte der Referenzmerkmale 18 für die Zahnerkennung da. Der Schnittpunkt 22 befindet sich etwa in der Mitte des durch die Innenkanten 14 gebildeten U.

Die Auswertungssoftware für das Bild nimmt an, dass sich an dieser Stelle der Zahn 16 befindet. Im dargestellten Anwendungsfall ist dies auch so.

Die Farbe des Zahnes 16 an dieser Stelle wird erfasst, und die Software prüft, ob die benachbarten Pixel die gleiche oder zumindest eine sehr ähnliche Farbe haben. Wenn dies der Fall ist, wird eine Farbregion 24 durch Wachsen gebildet. Diese ist in Fig. 1 beispielhaft eingezeichnet, ebenso wie eine größere Region 26, die durch weiteres Wachsen entstanden ist.

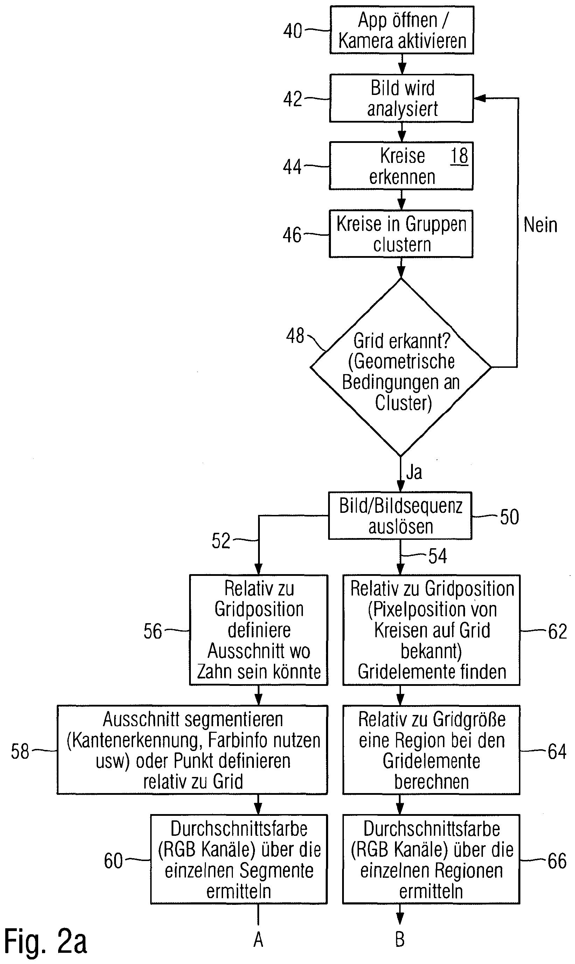

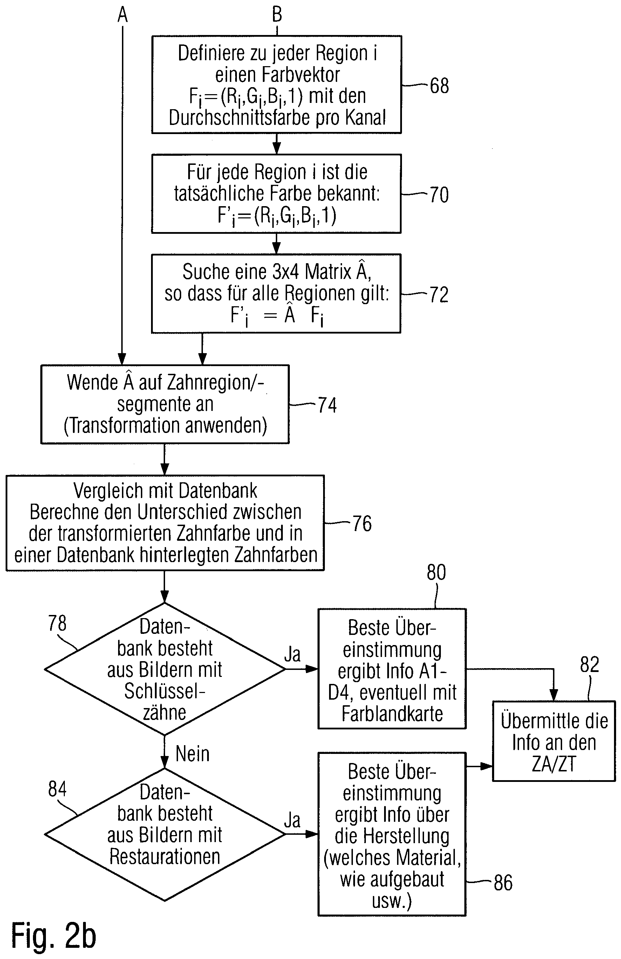

Das Verfahren im Einzelnen wird weiter unten anhand von Fig. 2a und 2b erläutert.

Den Innenkanten 14 benachbart sind zahlreiche Farbflächen 30 vorgesehen. Jede Farbfläche hat eine Zahnfarbe wie A1, A3, B2 und so weiter.

Es sind jedoch auch Farbflächen 30a und 30b mit gleicher Farbe vorhanden. Diese sind recht weit voneinander beabstandet und der Software sowohl hinsichtlich ihrer Farbgebung als auch hinsichtlich ihrer Anordnung bekannt.

Wenn die Bildaufnahme ergibt, dass die Farben an den Stellen 30a und 30b unterschiedlich sind, wird eine Farbkorrektur vorgenommen, und es wird angenommen, dass zwischen den betreffenden Bereichen der Aufnahme ein Farbgradient besteht.

Die Software korrigiert die ermittelten Farbwerte automatisch entsprechend dem Farbgradienten.

In gleicher Weise wird mit einem Helligkeitsgradienten verfahren, der ebenfalls zwischen den Farbflächen 30a und 30b bestehen kann und ebenfalls korrigiert wird.

Aus Fig. 1 ist ferner ersichtlich, dass sich im Mittelschenkel 32 des U Codierflächen 34, 36 und 38 befinden. Diese Codierflächen sind im Beispielsfalle mit QR-Codes versehen, die bestimmte Eigenschaften des Farbwahlhilfskörpers 10 wiedergeben.

In Fig. 2 ist ein Flussdiagramm zur Erläuterung des erfindungsgemäßen Verfahrens wiedergegeben.

Zunächst wird der Farbselektionshilfskörper 10 in der aus Fig. 1 ersichtlichen Weise an den Zahn 16 gehalten oder befestigt.

Dieses ergibt das, was aus Fig. 1 ersichtlich ist, abgesehen von den Linien 20b und 20b und den Regionen 24 und 26 die in Fig. 1 lediglich schematisch eingezeichnet sind.

Nach der Positionierung der Fotobox wird im Schritt 40 in an sich bekannter Weise die Kamera-App des Smartphones angesteuert und damit die Kamera aktiviert und eine Bildaufnahme bereitgestellt. Dieses Bild wird bei 42 analysiert und zwar sowohl hinsichtlich des Helligkeit- und Farbverlaufes mit den Farbflächen 30a und 30b als auch hinsichtlich der Referenzmerkmale 18.

Eine Kamera wird aktiviert und die erfassten Bilder hinsichtlich der Referenzmerkmale untersucht. Dies wird solange wiederholt, bis die Merkmale lokalisiert/gefunden wurden. Das letzte Bild mit den lokalisierten Referenzpunkten wird anschliessend weiterverwendet.

Die nachfolgenden drei Schritte können in beliebiger Reihenfolge oder parallel durchgeführt werden.

Schritt 1: Der Zahn wird segmentiert. Ausgehend von der Position der Referenzpunkte wird die Bildinformation beim Punkt in deren Mitte ausgewertet. Dort erwartet man den Zahn. Mit dieser Information kann man nun die Zahnregion wachsen lassen.

Schritt 2: Aufgrund von nicht homogener Ausleuchtung der Mundsituation kann es vorkommen, dass Helligkeitsverläufe auf dem Bild sind. Diese werden im Schritt "Helligkeitsverlauf korrigieren" korrigiert. Ist die Aufnahmesituation stets gleich oder ist kein Helligkeitsverlauf sichtbar, so ist dieser Schritt nicht nötig. Für diesen Schritt werden auf dem Farbselektionshilfskörper wohldefinierte Farben ausgewertet. Am einfachsten gelingt dies mit gleichen Farbwerten. Sind dann Abweichungen zwischen diesen Farbwerten ersichtlich, können die Farben des Bildes dementsprechend angepasst werden.

Schritt 3: Farbflächen lokalisieren. Auf dem Farbselektionshilfskörper sind relativ zu den Referenzmerkmalen Farbflächen angeordnet. Mit Hilfe der Position der Referenzflächen können damit die Farbflächen lokalisiert werden.

Nach den potentiell parallelisierbaren Schritten 1 bis 3 können nun die Objektfarbe (Zahnfarbe) und die Referenzfarben (Farben auf den Farbflächen) ausgelesen werden.

Mit Hilfe der Referenzfarben wird anschliessend eine Transformation berechnen. Diese Transformation wird auf die Objektfarbe angewandt. Damit sind nun alle Farben sozusagen normiert und können mit Farben aus einer virtuellen Bibliothek verglichen werden und die Objektfarbe innerhalb der Bibliothek eingeordnet werden.

## Patentansprüche

1. Verfahren zur Bestimmung von Farben eines dentalen Objektes, mit einem Farbselektionshilfskörper (10), wobei auf dem mindestens ein Referenzmerkmal (18), bevorzugt 4, für die Erkennung des Farbselektionshilfskörpers (10) angebracht ist und wobei, bezogen auf das mindestens eine Referenzmerkmal (18), eine Mehrzahl von Farbflächen (30) auf dem Farbselektionshilfskörper (10) angeordnet ist, **dadurch gekennzeichnet, dass** durch eine Kamera-App eine Kamera aktiviert wird und eine Bildaufnahme bereitgestellt wird, und dass bei Erkennung, mittels Bildauswertung, des mindestens einen Referenzmerkmals (18) die Bildaufnahme automatisch ausgelöst wird, so dass ein Bild oder eine Bildsequenz des dentalen Objektes mit einem dem dentalen Objekt benachbarten Farbselektionshilfskörper (10) fotografisch aufgenommen wird, und dass dann durch die Kamera-App basierend auf dem Farbselektionshilfskörper (10) und diesem Bild oder dieser Bildsequenz eine Farbe des dentalen Objektes bestimmt wird.

2. Verfahren nach Anspruch 1, **dadurch gekennzeichnet, dass** relativ zu mindestens einem Referenzmerkmal (18), insbesondere mehreren Referenzmerkmalen (18) ein Startpunkt oder eine Kleinregion (24) in dem Bild bestimmt wird, insbesondere ein Schnittpunkt (22) von Verbindungslinien (20) der Referenzmerkmale (18) in dem Bild markiert wird, und der Startpunkt oder die Kleinregion (24) des Bildes, die den Startpunkt aufweist, zu ihren Außengrenzen, in Abhängigkeit von einem Unterschied der Helligkeit von Farbflächen mit gleicher Helligkeit und gleicher Farbe, welche bei dem aufgenommen Bild unterschiedlich erscheinen, bis zu einer Endregion vergrößert wird, bis ein dentales Objekt im Bild erfasst ist.

3. Verfahren nach Anspruch 1, **dadurch gekennzeichnet, dass** relativ zu den Referenzmerkmalen ein Startpunkt oder eine Kleinregion (24) in dem Bild oder in mindestens einem Bild der Bildsequenz bestimmt wird und in Abhängigkeit von der Bildinformation innerhalb des Startpunktes oder der Kleinregion (24) eine oder mehrere Endregion segmentiert wird, und dass in den so erzeugten Segmenten je die Farbe bestimmt wird.

4. Verfahren nach Anspruch 2 oder 3, **dadurch gekennzeichnet, dass** die Endregion unter Berücksichtigung der Nachbarpixel innerhalb eines vorgegebenen Nachbarschaftsbereichs iterativ segmentiert wird.

5. Verfahren nach Anspruch 2, 3 oder 4, **dadurch gekennzeichnet, dass** ausgewählte Segmente der Endregion dahingehend geprüft werden, welche Farben der Farbflächen ihnen am ähnlichsten sind.

6. Verfahren nach einem der vorhergehenden Ansprüche, **dadurch gekennzeichnet, dass** der Farbselektionshilfskörper (10) per Bildauswertung mit einer Auswertungssoftware automatisch erkannt wird, aufgrund des mindestens einen Referenzmerkmales (18).

7. Verfahren nach einem der vorhergehenden Ansprüche, **dadurch gekennzeichnet, dass** basierend auf Farbflächen (30) auf dem Farbselektionshilfskörper (10) eine Transformation in einen Referenzraum vorgenommen wird, also eine Farbanpassung entsprechend dem Grauabgleich, nach der Art einer Graukarte, jedoch im Zahnfarbenraum oder im Farbraum des dentalen Objektes.

8. Verfahren nach Anspruch 7, **dadurch gekennzeichnet, dass** das Ergebnis der Transformation normiert wird, also dass die Farbanpassung entsprechend einem Grauabgleich, nach der Art einer Graukarte, jedoch im Zahnfarbenraum oder im Farbraum des dentalen Objektes, auf die Objektfarbe angewandt wird. und das normierte Ergebnis mit einer virtuellen Bibliothek verglichen wird, die entweder Daten von Schlüsselzähnen oder sonstigen dentalen Objekten oder Daten von Restaurationen oder Kombinationen dieser aufweist.

9. Verfahren nach einem der Ansprüche 1 bis 7, **dadurch gekennzeichnet, dass** eine Transformation einer virtuellen Bibliothek mit den Eigenschaften gemäß Anspruch 7 in einen absoluten oder standardisierten Farbraum vorgenommen wird, und dass ein Vergleich von Farbflächen im Bild mit dem Ergebnis der Transformation vorgenommen wird.

10. Verfahren nach einem der vorhergehenden Ansprüche, **dadurch gekennzeichnet, dass** bei der Ermittlung des mindestens einen Referenzmerkmales (18) aufgrund besonderer Eigenschaften des mindestens einen Referenzmerkmales (18) wie der Form und der Farbe, wie z.B., Kreisform, schwarz, das mindestens eine Referenzmerkmal (18) von anderen stochastisch verteilten ähnlichen grafischen Gebilden unterschieden wird.

11. Verfahren nach einem der folgenden Ansprüche, **dadurch gekennzeichnet, dass** das sich insbesondere zweidimensional erstreckende mindestens eine Referenzmerkmal (18) die Ausrichtung des Bildes und somit die Ausrichtung eines erwünschten dentalen Objektes festlegt.

12. Verfahren nach einem der vorhergehenden Ansprüche, **dadurch gekennzeichnet, dass** der Farbselektionshilfskörper (10) so an einen oder mehrere Nachbarzähne (16) einer zu erstellenden Dentalrestauration gehalten wird, dass er diesen Zahn oder diese Zähne wenigstens abschnittsweise, insbesondere je U-förmig oder L-förmig, umgibt.

13. Verfahren nach einem der vorhergehenden Ansprüche, **dadurch gekennzeichnet, dass** mindestens zwei, insbesondere vier, Farbflächen (30A, 30B) mit bekannten Farbwerten, insbesondere mit gleichen Farbwerten, räumlich voneinander getrennt, insbesondere dem mindestens einen Referenzmerkmal (18) benachbart, auf dem Farbselektionskörper (10) angebracht sind und dass eine Normierung über den Bildverlauf, insbesondere horizontal und vertikal, hinsichtlich der Farbe vorgenommen wird.

14. Verfahren nach einem der vorhergehenden Ansprüche, **dadurch gekennzeichnet, dass** die Farbflächen (30) innerhalb des Bildes erkannt werden und für jede Farbfläche (30) eine Farbflächenregion festgelegt wird, mit einem Farbvektor als Durchschnittsfarbe der Farbflächenregion.

15. Verfahren nach einem der vorhergehenden Ansprüche, **dadurch gekennzeichnet, dass** die erfassten Farbflächenregionen normiert werden, bezogen auf den Verlauf gemäß Anspruch 13.

16. Verfahren nach einem der vorhergehenden Ansprüche, **dadurch gekennzeichnet, dass** die Farbflächen (30) angrenzend an die Innenkante (14) des Farbselektionshilfskörpers (10) vorgesehen sind.

17. Verfahren nach einem der vorhergehenden Ansprüche , **dadurch gekennzeichnet, dass** die Farbbestimmung nach einem oder mehreren der Ansprüche 2 bis 16 automatisch erfolgt, oder ein Programm, das die Farbbestimmung ausführt, dem Benutzer einen bestätigbaren Vorschlag unterbreitet.

18. System aus Kamera-App und Farbselektionshilfskörper (10) zur Bestimmung von Farben eines dentalen Objektes, wobei auf dem Farbselektionshilfskörper (10) mindestens ein Referenzmerkmal (18), bevorzugt vier, für die Erkennung des Farbselektionshilfskörpers (10) angebracht ist und wobei, bezogen auf das mindestens eine Referenzmerkmal (18), eine Mehrzahl von Farbflächen (30) auf dem Farbselektionshilfskörper (10) angeordnet ist, wobei die Kamera-App eingerichtet ist, eine Kamera zu aktivieren, um eine Bildaufnahme bereitzustellen und deren Bild hinsichtlich des mindestens einen Referenzmerkmals auf dem Farbselektionshilfskörper zu analysieren und, bei Erkennung des mindestens einen Referenzmerkmals (18), die Bildaufnahme automatisch auszulösen, so dass ein Bild oder eine Bildsequenz des dentalen Objektes mit einem dem dentalen Objekt benachbarten Farbselektionshilfskörper (10) fotografisch aufgenommen wird, und basierend auf dem Farbselektionshilfskörper (10) und diesem Bild oder dieser Bildsequenz eine Farbe des dentalen Objektes bestimmt wird.

## Claims

1. A method for determining colors of a dental object, comprising a color selection auxiliary body (10), to which at least one reference feature (18), preferably 4, for recognition of the color selection auxiliary body (10) is attached, and wherein, with respect to the at least one reference feature (18), a plurality of color fields (30) is arranged on the color selection auxiliary body (10), **characterized in that** by means of a camera app a camera is activated and an image recording is provided, and **in that** upon recognition, by means of image evaluation, of the at least one reference feature (18) image recording is triggered automatically such that an image or an image sequence of the dental object is recorded photographically with a color selection auxiliary body (10) adjacent to the dental object, and **in that** a color of the dental object is subsequently determined by means of the camera app based on the color selection auxiliary body (10) and this image or this image sequence.

2. The method according to claim 1, **characterized in that**, in relation to at least one reference feature (18), in particular a plurality of reference features (18), a starting point or a small region (24) is determined in the image, in particular an intersection (22) of connecting lines (20) of the reference features (18) is marked in the image, and the starting point or the small region (24) of the image comprising the starting point is extended to its outer limits as a function of a difference in brightness of color fields with the same brightness and the same color, which seem different in the recorded image, up to an end region until a dental object is detected in the image.

3. The method according to claim 1, **characterized in that** a starting point or a small region (24) is determined in the image or in at least one image of the image sequence, in relation to the reference features, and one or more end regions are segmented as a function of the image information within the starting point or the small region (24), and **in that** the color is determined in each of the segments thus generated.

4. The method according to claim 2 or 3, **characterized in that** the end region is iteratively segmented within a predetermined neighboring region taking into account the neighboring pixels.

5. The method according to claim 2, 3 or 4, **characterized in that** selected segments of the end region are tested to determine which colors of the color fields are most similar to them.

6. The method according to one of the preceding claims, **characterized in that** the color selection auxiliary body (10) is automatically recognized by image evaluation with an evaluation software, due to the at least one reference feature (18).

7. The method according to one of the preceding claims, **characterized in that** a transformation into a reference space is carried out based on color fields (30) on the color selection auxiliary body (10), i.e. a color adaptation according to the gray balance, in the manner of a gray card, but in the tooth color space or in the color space of the dental object.

8. The method according to claim 7, **characterized in that** the result of the transformation is normalized, i.e. that the color adaptation in accordance with a gray balance, in the manner of a gray card, but in the tooth color space or in the color space of the dental object is applied to the object color, and that the normalized result is compared to a virtual library having either data of key teeth or other dental objects or data of restoration parts or combinations thereof.

9. The method according to one of the claims 1 to 7, **characterized in that** a transformation of a virtual library having the properties according to claim 7 is performed into an absolute or standardized color space, and **in that** comparison of color fields in the image is performed with the result of the transformation.

10. The method according to one of the preceding claims, **characterized in that**, in determining the at least one reference feature (18) on the basis of specified properties of the at least one reference feature (18) like shape and color, such as circular shape, black, the at least one reference feature (18) is distinguished from other stochastically distributed similar graphic entities.

11. The method according to one of the following claims, **characterized in that** the at least one reference feature (18) extending particularly two-dimensionally determines the orientation of the image and thus the orientation of a desired dental object.

12. The method according to one of the preceding claims, **characterized in that** the color selection auxiliary body (10) is held against one or more neighboring teeth (16) of a dental restoration to be produced such that it surrounds this tooth or these teeth at least sectionally, in particular in a U-shaped or L-shaped manner in each case.

13. The method according to one of the preceding claims, **characterized in that** at least two, in particular four, color fields (30A, 30B) having known color values, in particular having identical color values, are spatially separated from each other, in particular adjacent to the at least one reference feature (18), and attached to the color selection body (10), and **in that** normalization is done with respect to the color across the image progression, in particular horizontally and vertically.

14. The method according to one of the preceding claims, **characterized in that** the color fields (30) are recognized within the image and a color field region is defined for each color field (30) using a color vector as an average color of the color field region.

15. The method according to one of the preceding claims, **characterized in that** the detected color field regions are normalized in relation to the progression according to claim 13.

16. The method according to one of the preceding claims, **characterized in that** the color fields (30) are provided adjacent to the inner edge (14) of the color selection auxiliary body (10).

17. The method according to one of the preceding claims, **characterized in that** image determination is done automatically according to one or more of claims 2 to 16, or **in that** a program which executes the image determination submits a verifiable proposal to the user.

18. A system, comprising a camera app and a color selection auxiliary body (10), for determining the colors of a dental object, wherein at least one reference feature (18), preferably four, is attached to the color selection auxiliary body (10) for recognizing the color selection auxiliary body (10), and wherein with respect to the at least one reference feature (18), a plurality of color fields (30) is arranged on the color selection auxiliary body (10), wherein the camera app is configured to activate a camera to provide an image recording and to analyze its image with respect to the at least one reference feature on the color selection auxiliary body, and upon recognition of the at least one reference feature (18), to automatically trigger the image recording such that an image or an image sequence of the dental object is recorded photographically with a color selection auxiliary body (10) adjacent to the dental object, and a color of the dental object is determined based on the color selection auxiliary body (10) and this image or this image sequence.

## Revendications

1. Procédé pour déterminer les couleurs d'un objet dentaire, avec un corps auxiliaire de sélection de couleur (10), sur lequel est appliquée au moins une caractéristique de référence (18), de préférence 4, pour la reconnaissance du corps auxiliaire de sélection de couleur (10) et où, par rapport à ladite au moins une caractéristique de référence (18), une pluralité de surfaces colorées (30) est disposée sur le corps auxiliaire de sélection de couleur (10), **caractérisé en ce qu'**une caméra est activée par une application de caméra et une prise d'image est mise à disposition, et **en ce que**, lors de la reconnaissance, au moyen d'une évaluation d'image, de ladite au moins une caractéristique de référence (18), la prise de vue est déclenchée automatiquement, de sorte qu'une image ou une séquence d'images de l'objet dentaire est prise par photographie avec un corps auxiliaire de sélection de couleur (10) voisin de l'objet dentaire, et **en ce qu'**une couleur de l'objet dentaire est ensuite déterminée par l'application de caméra sur la base du corps auxiliaire de sélection de couleur (10) et de cette image ou de cette séquence d'images.

2. Procédé selon la revendication 1, **caractérisé en ce que**, par rapport à au moins une caractéristique de référence (18), en particulier plusieurs caractéristiques de référence (18), un point de départ ou une petite région (24) est déterminé (e) dans l'image, en particulier un point d'intersection (22) de lignes de liaison (20) des caractéristiques de référence (18) est marqué dans l'image, et le point de départ ou la petite région (24) de l'image, qui présente le point de départ, est agrandi(e) vers ses limites extérieures, en fonction d'une différence de luminosité de surfaces colorées de même luminosité et de même couleur, qui apparaissent différentes dans l'image prise, jusqu'à une région finale, jusqu'à ce qu'un objet dentaire soit saisi dans l'image.

3. Procédé selon la revendication 1, **caractérisé en ce que**, par rapport aux caractéristiques de référence, un point de départ ou une petite région (24) est déterminé(e) dans l'image ou dans au moins une image de la séquence d'images et, en fonction de l'information d'image, une ou plusieurs régions finales sont segmentées à l'intérieur du point de départ ou de la petite région (24), et **en ce que** la couleur est déterminée dans chacun des segments ainsi générés.

4. Procédé selon la revendication 2 ou 3, **caractérisé en ce que** la région finale est segmentée de manière itérative en tenant compte des pixels voisins à l'intérieur d'une zone de voisinage prédéfinie.

5. Procédé selon la revendication 2, 3 ou 4, **caractérisé en ce que** des segments sélectionnés de la région finale sont examinés pour déterminer quelles couleurs des surfaces colorées leur sont les plus similaires.

6. Procédé selon l'une des revendications précédentes, **caractérisé en ce que** le corps auxiliaire de sélection de couleur (10) est reconnu automatiquement par évaluation d'image avec un logiciel d'évaluation, sur la base de ladite au moins une caractéristique de référence (18).

7. Procédé selon l'une des revendications précédentes, **caractérisé en ce que**, sur la base de surfaces colorées (30) sur le corps auxiliaire de sélection de couleur (10), une transformation est effectuée dans un espace de référence, c'est-à-dire une adaptation de couleur correspondant à l'équilibrage des gris, à la manière d'une carte de gris, mais dans l'espace de couleur de la dent ou dans l'espace de couleur de l'objet dentaire.

8. Procédé selon la revendication 7, **caractérisé en ce que** le résultat de la transformation est normalisé, c'est-à-dire que l'adaptation de couleur est appliquée à la couleur de l'objet selon une correspondance de gris, à la manière d'une carte de gris, mais dans l'espace de couleur des dents ou dans l'espace de couleur de l'objet dentaire, et le résultat normalisé est comparé à une bibliothèque virtuelle qui comprend soit des données de dents clés ou d'autres objets dentaires, soit des données de restaurations ou des combinaisons de celles-ci.

9. Procédé selon l'une des revendications 1 à 7, **caractérisé en ce qu'**on effectue une transformation d'une bibliothèque virtuelle ayant les propriétés selon la revendication 7 dans un espace chromatique absolu ou normalisé, et **en ce qu'**on effectue une comparaison de surfaces colorées dans l'image avec le résultat de la transformation.

10. Procédé selon l'une des revendications précédentes, **caractérisé en ce que**, lors de la détermination de ladite au moins une caractéristique de référence (18), en raison de propriétés particulières de ladite au moins une caractéristique de référence (18), telles que la forme et la couleur, comme par exemple, forme circulaire, noire, ladite au moins une caractéristique de référence (18) est distinguée par rapport à d'autres formations graphiques similaires réparties de manière stochastique.

11. Procédé selon l'une des revendications suivantes, **caractérisé en ce que** ladite au moins une caractéristique de référence (18), qui s'étend en particulier en deux dimensions, détermine l'orientation de l'image et donc l'orientation d'un objet dentaire souhaité.

12. Procédé selon l'une des revendications précédentes, **caractérisé en ce que** le corps auxiliaire de sélection de couleur (10) est maintenu contre une ou plusieurs dents voisines (16) d'une restauration dentaire à réaliser de telle sorte qu'il entoure cette dent ou ces dents au moins par sections, en particulier en forme de U ou de L.

13. Procédé selon l'une des revendications précédentes, **caractérisé en ce qu'**au moins deux, en particulier quatre, surfaces colorées (30A, 30B) avec des valeurs de couleur connues, en particulier avec des valeurs de couleur identiques, sont séparées spatialement les unes des autres, en particulier voisines de ladite au moins une caractéristique de référence (18), et **en ce qu'**une normalisation est effectuée sur le tracé de l'image, en particulier horizontalement et verticalement, en ce qui concerne la couleur.

14. Procédé selon l'une des revendications précédentes, **caractérisé en ce que** les surfaces colorées (30) sont reconnues à l'intérieur de l'image et **en ce que**, pour chaque surface colorée (30), une région de surface colorée est déterminée, avec un vecteur de couleur comme couleur moyenne de la région de surface colorée.

15. Procédé selon l'une des revendications précédentes, **caractérisé en ce que** les régions de surfaces colorées détectées sont normalisées par rapport à l'allure selon la revendication 13.

16. Procédé selon l'une des revendications précédentes, **caractérisé en ce que** les zones colorées (30) sont prévues adjacentes au bord interne (14) du corps auxiliaire de sélection de couleur (10).

17. Procédé selon l'une des revendications précédentes, **caractérisé en ce que** la détermination de la couleur selon une ou plusieurs des revendications 2 à 16 est réalisée automatiquement, ou un programme réalisant la détermination de la couleur fait une proposition validable à l'utilisateur.

18. Système composé d'une application de caméra et d'un corps auxiliaire de sélection de couleur (10) pour déterminer les couleurs d'un objet dentaire, où au moins une caractéristique de référence (18), de préférence quatre, pour la reconnaissance du corps auxiliaire de sélection de couleur (10) est appliquée sur le corps auxiliaire de sélection de couleur (10) et où, par rapport à ladite au moins une caractéristique de référence (18), une pluralité de surfaces de couleur (30) est disposée sur le corps auxiliaire de sélection de couleur (10), où l'application de caméra ést conçue pour activer une caméra, pour fournir une prise de vue et analyser son image par rapport à ladite au moins une caractéristique de référence sur le corps auxiliaire de sélection de couleur et, en cas de reconnaissance de ladite au moins une caractéristique de référence (18), déclencher automatiquement la prise de vue, de sorte qu'une image ou une séquence d'images de l'objet dentaire est prise par photographie avec un corps auxiliaire de sélection de couleur (10) voisin de l'objet dentaire, et une couleur de l'objet dentaire est déterminée sur la base du corps auxiliaire de sélection de couleur (10) et de cette image ou de cette séquence d'images.
